(19) Europäisches Patentamt
European Patent Office
Office européen des brevets

(11) **EP 2 306 672 B1**

(12) **FASCICULE DE BREVET EUROPEEN**

(45) Date de publication et mention
de la délivrance du brevet:
**15.05.2013 Bulletin 2013/20**

(21) Numéro de dépôt: **10174126.2**

(22) Date de dépôt: **26.08.2010**

(51) Int Cl.:
*H04L 12/24* (2006.01)      *G06F 9/445* (2006.01)
*G06F 9/54* (2006.01)

(54) **Méthode de génération de fichiers de configuration d'interface pour calculateurs d'une plateforme avionique**

Verfahren zur Generierung von Schnittstellenkonfigurationsdaten für Avionikplattformen

Method for generating interface configuration files for avionics platform computers

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **16.09.2009 FR 0956355**

(43) Date de publication de la demande:
**06.04.2011 Bulletin 2011/14**

(73) Titulaire: **Airbus Operations (Société par actions simplifiée)**
**31060 Toulouse (FR)**

(72) Inventeur: **Minot, Frédéric**
**31810, VENERQUE (FR)**

(74) Mandataire: **Augarde, Eric et al**
**BREVALEX**
**56 Boulevard de l'Embouchure,**
**Bât. B**
**B.P. 27519**
**31075 Toulouse Cedex 2 (FR)**

(56) Documents cités:
- **ALENA R L ET AL: "Communications for Integrated Modular Avionics" AEROSPACE CONFERENCE, 2007 IEEE, IEEE, PISCATAWAY, NJ, USA, 3 mars 2007 (2007-03-03), pages 1-18, XP031214239 ISBN: 978-1-4244-0524-4**
- **BIEBER P ET AL: "Constraint-based Design of Avionics Platform Preliminary Design Exploration" INTERNET CITATION 31 janvier 2008 (2008-01-31), page 7PP, XP007912632 Extrait de l'Internet: URL:http://www.cert.fr/ francais/deri/biebe r/papers/ERTS2008_Bieber_ 0063.pdf [extrait le 2010-04-14]**
- **CONDOR ENGINEERING: "AFDX Protocol Tutorial (Version 3.0)" INTERNET CITATION 1 mai 2005 (2005-05-01), page 55PP, XP007912659 Extrait de l'Internet: URL: www.acalmicrosystems.co.uk/whitepapers /sbs8.pdf [extrait le 2010-04-15]**
- **CONDOR ENGINEERING: "ARINC 429 Protocol Tutorial (Version 1.07)" INTERNET CITATION 16 juillet 2004 (2004-07-16), page 29PP, XP007912660 Extrait de l'Internet: URL: www.acalmicrosystems.co.uk/whitepapers /sbs7.pdf [extrait le 2010-04-15]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

## Description

## DOMAINE TECHNIQUE

La présente invention concerne de manière générale le domaine des plateformes avioniques, notamment mais non exclusivement celles qui sont réalisées selon une architecture modulaire intégrée, dite IMA (*Integrated Modular Avionics*).

## ÉTAT DE LA TECHNIQUE ANTÉRIEURE

La réalisation d'une plateforme avionique, c'est-à-dire de l'ensemble des moyens de calcul et de communication embarqués permettant d'exécuter les fonctions d'un aéronef fait traditionnellement appel à des calculateurs et des bus de communication dédiés. Dans une telle plateforme, chaque fonction de l'aéronef, dénommée ci-après fonction avionique, est implémentée à l'aide de calculateurs ayant une architecture et des entrées-sorties spécifiques à la réalisation de la fonction. Ceci implique de réaliser, certifier et maintenir un grand nombre de composants ou LRUs (*Line Replaceable Units*), et ce quasiment à chaque fois qu'un nouveau type d'appareil doit être conçu.

Pour remédier à cette source de complexité et de coûts, les plateformes avioniques de nouvelle génération utilisent, autant que faire se peut, une architecture modulaire intégrée (IMA). Dans ce type d'architecture, les fonctions avioniques sont implémentées dans des ressources partagées, en pratique sous forme de modules logiciel hébergés par des calculateurs génériques, et utilisant des moyens de communication non dédiés. Une telle plateforme présente de nombreux avantages en termes de réduction de la quantité de calculateurs, du nombre de types différents de calculateurs, de nombre de câbles, etc., ce qui se traduit en définitive par un bilan de masse plus favorable et d'importants gains en matière de maintenance et de gestion des stocks.

Quel que soit le type de plateforme, les différentes fonctions avioniques échangent des messages, dits messages fonctionnels. Par exemple la fonction avionique chargée du calcul de la position de l'aéronef est capable de transmettre un message de position à celle chargée de la gestion de vol. Ces fonctions avioniques étant implémentées par des calculateurs dédiés ou génériques, ces échanges au niveau fonctionnel se traduisent en pratique par des échanges de données au moyen d'interfaces situées dans les différents calculateurs. Par interface on entend ici l'ensemble des moyens physiques et logiques permettant à un calculateur de recevoir et/ou de transmettre des données. Ces interfaces sont configurées de manière logicielle lors d'une étape d'initialisation à l'aide de fichiers de configuration d'interface, résidant dans les différents calculateurs, et dénommés ci-après plus simplement fichiers d'interface.

La génération des fichiers d'interface et, de manière plus générale, la configuration des interfaces, est traditionnellement réalisée de manière manuelle par des opérateurs de saisie avec des risques d'erreurs non négligeables, erreurs qui peuvent avoir des répercussions importantes lors des phases d'intégration et de validation de l'aéronef.

L'intégration des systèmes d'un aéronef est réalisée de manière incrémentale, fonction par fonction ou, plus généralement, ensemble de fonctions par ensemble de fonctions. A chaque étape d'intégration, il faut alors déterminer les calculateurs nécessaires à l'implémentation des fonctions à intégrer et configurer les interfaces de ces calculateurs de manière à ce que les échanges entre calculateurs supportent effectivement les échanges entre lesdites fonctions.

En outre, il faut s'assurer que chaque interface soit à même de supporter l'ensemble des échanges fonctionnels dans laquelle elle intervient. Si des modifications fonctionnelles sont introduites tardivement, cette phase de validation peut donner lieu à des allers-retours avec la phase de conception et par suite à des retards importants, puisque chaque interface impactée doit être reconfigurée manuellement.

Enfin, à chaque conception d'un nouvel aéronef voire d'une nouvelle version du même aéronef, ce travail de configuration des interfaces doit être entièrement repris, quand bien même l'architecture fonctionnelle resterait identique. Le problème se pose de manière similaire si l'aéronef fait l'objet d'un rattrapage (retrofit).

L'article de R.L. Alena et al. intitulé « Communications for Integrated Modular Avionics » Aerospace Conference 2007, pages 1-18 décrit une plateforme avionique de type IMA obéissant à la norme ARINC 653 de partitionnement des ressources de calcul.

L'article de P. Bieber et al. intitulé « Constraint-based design of avionics platform - Preliminary design exploration » ERTS Toulouse, SEE, Janvier 2008, décrit une méthode de conception d'une plateforme avionique sous contraintes fonctionnelles et sous contraintes de sécurité.

Un objet de la présente invention est par conséquent de proposer une méthode de configuration assistée par ordinateur des interfaces d'une plateforme avionique, à partir d'une description fonctionnelle de cette plateforme.

## EXPOSÉ DE L'INVENTION

La présente invention est définie par une méthode de configuration d'interfaces de calculateurs appartenant à une plateforme avionique, ladite plateforme implémentant une pluralité de fonctions avioniques pouvant échanger des messages fonctionnels, chaque fonction avionique étant implémentée par des modules logiciel, dits occurrences de système fonctionnel, hébergés dans des calculateurs, lesdits calculateurs pouvant communiquer à l'aide d'occurrences de signal transmis sur des supports de communication qui les relient entre eux. Pour chaque module logiciel hébergé par un calculateur, on crée des occurrences de signal pour transmettre tous les paramètres des messages fonctionnels émis par la fonction que le module logiciel implémente, ce sur tous les supports de communication, et l'on regroupe lesdites occurrences de signal par système fonctionnel, paramètre et support de transmission pour créer des classes d'occurrences de signal, et l'on configure les interfaces des calculateurs à l'aide des classes ainsi obtenues.

On attribue avantageusement à chaque classe, dénommée signal, un port de communication d'un calculateur.

Pour chaque module logiciel *fs_oc* hébergé par un calculateur, on peut déterminer la liste *f_l* des fonctions avioniques dans l'implémentation desquelles ce module logiciel intervient, puis la liste *p_l* des paramètres compris dans des messages fonctionnels émis par les fonctions de *f_l* et, pour chaque paramètre *p* de *p_l,* l'on détermine une liste *fl_l* de liens entre fonctions avioniques, dits liens fonctionnels, véhiculant au moins un message fonctionnel contenant ledit paramètre *p*, on en déduit une liste *path_l* de chemins à travers les supports de communication permettant d'acheminer lesdits messages, un chemin pouvant être constitué d'une liaison directe entre un premier calculateur et un second calculateur, ou bien d'une première liaison entre le premier calculateur et un premier noeud d'un réseau, d'un chemin à travers ce réseau et d'une seconde liaison entre un second noeud du réseau et le second calculateur, et enfin l'on détermine la liste *med_l* des supports de communication empruntés en premier par les chemins de *path_l.*

Avantageusement, pour un module logiciel donné *fs_oc,* on crée une occurrence de signal, pour chaque paramètre *p* de *p_l,* chaque support de communication *med* de *med_l* et un sous-ensemble *signal_oc_path_l* de chemins de *path_l* tel que la première liaison de ces chemins passe par un support de communication *med* de *med_l.*

Selon une variante, la plateforme avionique comprend au moins un calculateur relié à deux supports de communication de types distincts, ledit calculateur hébergeant un module logiciel adapté à opérer comme passerelle applicative entre les deux supports de communication.

Pour une occurrence de signal donnée, *signal_oc,* associée à un module logiciel *fs_oc,* un paramètre *p*, et un sous-ensemble *signal_oc_path_l,* on peut déterminer un sous-ensemble de celui-ci, *signal_oc_gtw_l* constitué des chemins passant par au moins un calculateur hébergeant une dite passerelle applicative, puis l'ensemble *gtw_l* des passerelles applicatives hébergées par des calculateurs placés sur les chemins de *signal_oc_gtw_l.* On détermine ensuite pour chaque passerelle *gtw* de *gtw_l* :

- la liste *gtw_rx_med_l* des supports de communication arrivant *gtw* via un chemin de *signal_oc_gtw_path_l ;*
- la liste *gtw_tx_med_l* des supports de communication partant de *gtw* via un chemin de *signal_oc_gtw_path_l ;*
- le sous-ensemble *gtw_path_l* de *signal_oc_gtw_path_l* constitué par les chemins passant par un calculateur hébergeant la passerelle *gtw.*

Pour chaque passerelle *gtw* de *gtw_l* et chaque support de communication de *gtw_tx_med_l,* on crée avantageusement une occurrence de signal *gtw_signal_oc* associée à la passerelle *gtw,* au paramètre *p,* au support de communication *med* et à l'ensemble de chemins *gtw_path_l.*

Pour chaque occurrence de signal *signal_oc,* associée à un module logiciel source *fs_oc* ou une passerelle applicative *gtw,* un paramètre *p,* un support de communication *med* et un ensemble de chemins *signal_oc_path_l* ou *gtw_path_l,* on détermine alors, pour chaque chemin *path* de *signal_oc_path_l* ou *gtw_path_l,* le premier calculateur placé sur le chemin *path* après celui qui héberge le module logiciel *fs_oc* ou la passerelle applicative *gtw,* et si ce calculateur héberge une passerelle, on associe l'occurrence de signal *signal_oc* à cette dernière, et dans la négative on l'associe au module logiciel destinataire de l'occurrence de lien fonctionnel associé au chemin *path*

Avantageusement, on attribue à l'occurrence de signal *signal_oc* un port de communication du calculateur hébergeant respectivement la passerelle applicative et le module logiciel destinataire.

Selon un mode de réalisation particulier, la plateforme avionique considérée ci-dessus est de type IMA.

## BRÈVE DESCRIPTION DES DESSINS

D'autres caractéristiques et avantages de l'invention apparaîtront à la lecture de modes de réalisation préférentiels de l'invention en référence aux figures jointes parmi lesquelles :

La Fig. 1 donne une représentation schématique orientée objet de l'architecture fonctionnelle d'un aéronef ;
La Fig. 2 donne une représentation schématique orientée objet de l'architecture matérielle d'une plateforme avionique ;
Les Figs. 3A à 3C illustrent des exemples de liaisons physiques, liens topologiques, chemins réseau et chemins topologiques dans une plateforme avionique ;
La Fig. 4 donne une représentation schématique orientée objet des échanges entre interfaces d'une plateforme avionique ;

Les Figs. 5A et 5B donnent une représentation orientée objet des interfaces de sortie et d'entrée respectives d'un calculateur de la plateforme avionique ;

La Fig. 6 représente l'organigramme d'une méthode de configuration d'une interface de sortie d'un calculateur selon un mode de réalisation de l'invention ;

La Fig. 7 donne un exemple simplifié de plateforme avionique permettant d'illustrer la méthode de configuration d'interface selon l'invention ;

La Fig. 8 illustre de manière schématique un exemple de passerelle applicative.

## EXPOSÉ DÉTAILLÉ DE MODES DE RÉALISATION PARTICULIERS

La méthode de génération des fichiers d'interface selon l'invention fait avantageusement appel à une description fonctionnelle de la plateforme avionique que nous présenterons à titre d'illustration dans le cadre d'une architecture IMA.

Cette plateforme est destinée à mettre en oeuvre un ensemble de fonctions avioniques prédéterminées. A titre d'exemple, ces fonctions avioniques peuvent être, le calcul de la position de l'avion, la gestion du plan de vol, le contrôle du roulis de l'avion, le calcul de la quantité de carburant, etc.

A chacune de ces fonctions avioniques, on associe en règle générale une pluralité de modules logiciel destinés à être hébergés dans des calculateurs génériques embarqués et dont chacun participe à la réalisation de la fonction. Pour des raisons de sûreté, certaines fonctions peuvent être dupliquées. Les modules logiciel de fonctions ainsi dupliquées ne sont pas nécessairement identiques. Par exemple, deux tels modules logiciel peuvent correspondre à une voie de commande (COM) et une voie de surveillance (MON) d'un système de contrôle de vol et utiliser des algorithmes différents pour réaliser la même fonction.

Les modules logiciel associés aux différentes fonctions avioniques peuvent échanger des messages entre eux via des liens, dénommés « occurrences de lien fonctionnel ». Par exemple, un module logiciel réalisant la fonction de contrôle de roulis peut transmettre un message d'alerte à un module logiciel en charge de la fonction d'affichage. De même un module logiciel chargé du calcul de la latitude et la longitude de l'aéronef peut transmettre ces informations de position à un module logiciel chargé du calcul du plan de vol.

L'ensemble des fonctions avioniques d'un aéronef ainsi que leurs relations entre elles peuvent avantageusement être représentées à l'aide d'une modélisation objet.

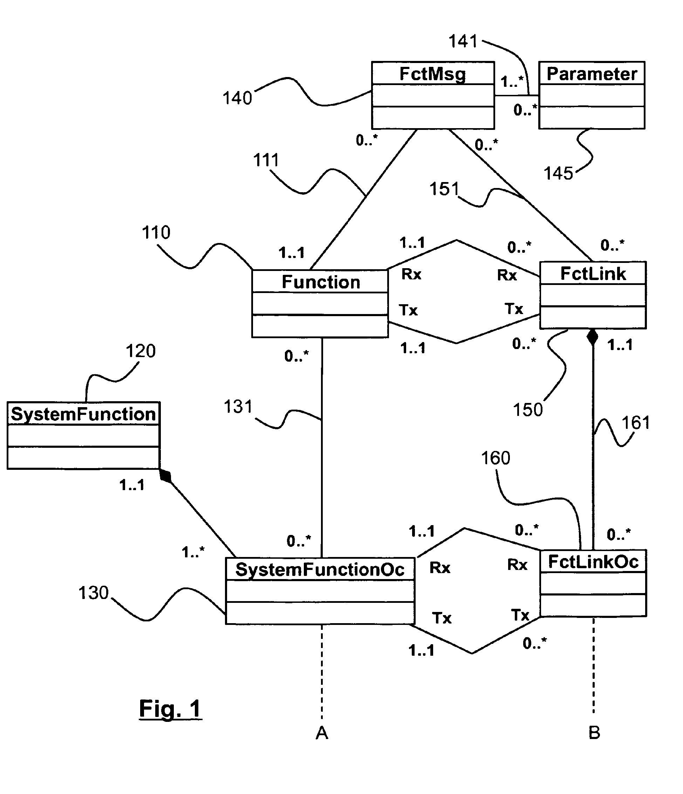

La Fig. 1 donne un diagramme UML (*Unified Modeling Language*) modélisant la structure de données et les relations entre fonctions avioniques d'un aéronef. On trouvera par exemple une description du langage UML dans l'ouvrage de F. Barbier intitulé « UML2 et MDE » publié chez Dunod.

Le modèle représenté comprend les objets (ou classes) dénommés « Function », « SystemFunction », « SystemFunctionOc », « FctMsg », « FctLink » et « FctLinkOc ». Pour des raisons de simplification, les attributs et les méthodes relatifs aux différents objets ont été omis là où ils n'apparaissaient pas nécessaires à la bonne compréhension de l'invention.

L'objet « Function », 110, correspond à une fonction avionique. Cet objet est associé avec une multiplicité quelconque à des objets « SystemFunctionOc », 130, explicités ci-après. Une fonction peut transmettre un nombre quelconque de messages, au moyen d'un lien symbolique, dénommé lien fonctionnel, à une autre fonction. Ainsi, l'objet « Function », 110, est associé à 0 à N objets « Fctmsg », 140, décrivant les messages en question. Chaque lien fonctionnel, modélisé par l'objet « FctLink », 150, est associé à une fonction avionique émettrice et une fonction avionique destinataire. Réciproquement, à une fonction peuvent être associés un nombre quelconque de liens fonctionnels entrants ainsi qu'un nombre quelconque de liens fonctionnels sortants. En outre, un lien fonctionnel peut voir transiter un nombre quelconque de messages et, réciproquement, un message d'une fonction avionique peut être transmis sur un nombre quelconque de liens fonctionnels. Un message peut être composé d'un ensemble de données élémentaires dénommées ci-après paramètres, représentés par l'objet 145. Par exemple, un message relatif à la position de l'aéronef pourra comprendre les paramètres de longitude et de latitude. Un paramètre peut être associé à un seul message ou être commun à plusieurs messages.

Chaque lien fonctionnel 150, est instanciable et composé de 0 à N occurrences de lien fonctionnel, 160. Les occurrences de lien fonctionnel sont désignées par l'objet « FctLinkOc ».

L'objet « SystemFunction » ou système fonctionnel, désigné par 120, est associé à au moins une occurrence « SystemFunctionOc », 130. L'objet 130 peut être considéré en pratique comme un module logiciel destiné à être hébergé par un équipement, l'objet 120 représentant alors une classe de tels modules logiciels. L'objet 130 est associé à un nombre quelconque d'occurrences de lien fonctionnel entrant, ainsi qu'à un nombre quelconque d'occurrences de lien fonctionnel sortant. Réciproquement, une occurrence de lien fonctionnel est associée à un module logiciel émetteur et un module logiciel destinataire.

Le modèle de la Fig. 1 permet de stocker une représentation fonctionnelle de la plateforme avionique dans une base de données, dite base de données fonctionnelle.

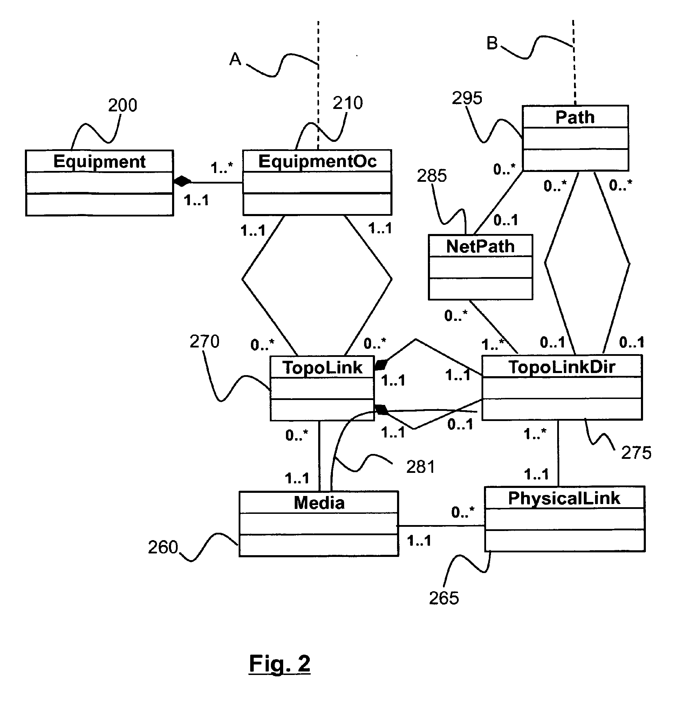

On a donné en Fig. 2 une représentation objet (en UML) de la structure matérielle de la plateforme avionique.

La structure matérielle est décrite à l'aide d'objets dénommés « Equipment », « EquipmentOc », « TopoLink », « TopoLinkDir », « NetPath », « Path », « Physical Link » et « Media » définis ci-après.

La brique de base de cette structure matérielle est l'objet « Equipment », 200, lui-même composé par une ou des occurrence(s) d'équipement, 210. Concrètement, l'objet « Equipment » représente une classe constituée d'éléments matériels tels que des calculateurs, des capteurs, des actuateurs, des commutateurs, des routeurs, des passerelles etc. Un équipement peut être plus généralement considéré comme un élément matériel disposant de ressources de calcul et/ou de communication. Chaque occurrence d'équipement, 210, hérite des attributs de l'objet « Equipment » et notamment de ses ressources matérielles.

L'objet « PhysicalLink », 265, représente les liaisons physiques, indépendamment du réseau auquel elles appartiennent éventuellement. Une liaison physique permet de relier une occurrence d'équipement à une ou plusieurs autres occurrence(s) d'équipement. Chaque liaison physique peut être constituée d'une ou de plusieurs branches de liaisons physiques, une branche de liaison physique reliant une occurrence d'équipement à une seule autre occurrence d'équipement.

L'objet « TopoLink » ou lien topologique, 270, est une entité abstraite indiquant la possibilité de connecter deux occurrences d'équipement au moyen d'une liaison physique, de manière unidirectionnelle ou bidirectionnelle. A partir de cet objet, on définit un lien topologique orienté, soit « TopoLinkDir », 275, chaque lien topologique étant composé soit d'un, soit de deux liens topologiques orientés. L'objet « TopoLinkDir » peut être considéré de manière équivalente comme une branche de liaison physique. L'objet « Media » donne le type de support de communication utilisé par une branche de liaison physique. Par exemple, ce support de communication peut être un réseau AFDX, un réseau ARINC 429, un bus CAN.

On définit encore l'objet de chemin réseau « NetPath », 285, comme une liste ordonnée et connexe de liens topologiques orientés entre des noeuds de réseau de communication. Il est important de souligner que les liaisons physiques sous-jacentes à ces liens topologiques orientés n'appartiennent pas nécessairement à un même réseau. Un chemin réseau comprend au moins un lien topologique et, inversement, un lien topologique orienté peut faire partie d'un nombre quelconque de chemins réseau, voire d'aucun chemin réseau si ce lien est isolé.

Enfin, on définit un objet plus général, dit « Path » ou chemin topologique, 295, pouvant relier deux occurrences quelconques d'équipement de la plateforme avionique. Un tel chemin est constitué soit d'un lien topologique orienté dans l'un ou l'autre sens (autrement dit, les occurrences d'équipement sont reliées par une simple liaison physique), soit d'un chemin réseau auquel est adjoint, à l'une ou à ses deux extrémité(s), un lien topologique orienté.

Le modèle de la Fig. 2 permet de stocker une représentation de l'architecture matérielle de la plateforme avionique dans une base de données, dite base de données matérielle.

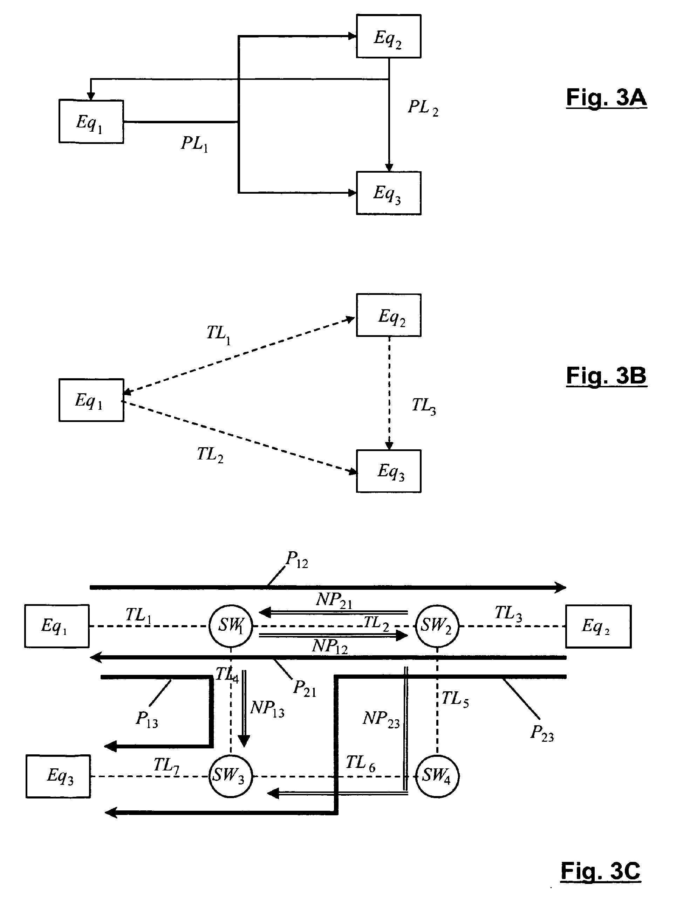

A titre d'illustration, nous avons donné en Figs. 3A à 3C des exemples de liaisons physiques, de liens topologiques, de chemins réseau et de chemins topologiques entre différents équipements.

On a représenté sur ces figures trois équipements (plus rigoureusement, selon la terminologie objet, trois occurrences d'équipement) $Eq_1, Eq_2, Eq_3$.

En Fig. 3A, l'équipement $Eq_1$ est relié aux équipements $Eq_2, Eq_3$ à l'aide d'une première liaison physique $PL_1$ (de type $1 \Rightarrow N$). De même, l'équipement $Eq_2$ est relié aux équipements $Eq_1, Eq_3$, à l'aide d'une seconde liaison physique $PL_2$ également (de type $1 \Rightarrow N$).

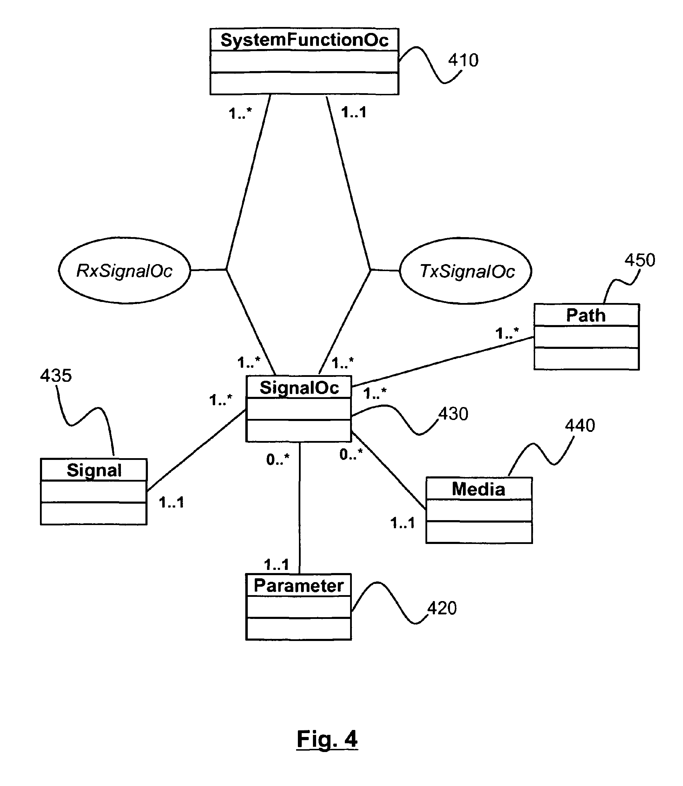

La Fig. 3B représente les liens topologiques $TL_1$, $TL_2$, $TL_3$ associés aux liaisons physiques de la Fig. 4A. Plus précisément, le lien topologique $TL_1$ entre les équipements $Eq_1$ et $Eq_2$ est associé aux liaisons physiques $PL_1$ et $PL_2$ entre ces deux équipements. Le lien topologique $TL_1$ est en fait composé d'un premier lien topologique orienté entre $Eq_1$ et $Eq_2$ et d'un second lien topologique orienté, de sens inverse. Les liens topologiques $TL_2$ et $TL_3$ sont respectivement associés aux liaisons physiques $PL_1$ et $PL_2$. Ils sont constitués chacun d'un seul lien topologique orienté. La Fig. 3C représente trois équipements $Eq_1, Eq_2, Eq_3$ reliés à l'aide d'un réseau AFDX comprenant quatre commutateurs $SW_1, ..., SW_4$. On a désigné par $TL_1$ à $TL_7$ les différents liens topologiques bidirectionnels (de type $1 \Leftrightarrow 1$), chaque lien topologique $TL_i$ étant constitué de deux liens topologiques orientés $TL_i^+$ et $TL_i^-$ (le sens positif a été conventionnellement choisi ici comme le sens horaire). On a également indiqué les chemins réseau $NP_{12}$ $NP_{21}$, $NP_{13}$, $NP_{23}$, définis respectivement par

$$NP_{12} = \left\{ TL_2^+ \right\} \quad ; \qquad NP_{21} = \left\{ TL_2^- \right\} \quad ; \qquad NP_{13} = \left\{ TL_4^+ \right\} ; \qquad NP_{23} = \left\{ TL_5^+, TL_6^+ \right\}.$$ Le chemin topologique $P_{12}$ qui relie l'équipement $Eq_1$ à l'équipement $Eq_2$ est alors constitué par $P_{12} = \left\{ TL_1^+, NP_{12}, TL_3^+ \right\}$ De manière similaire, le chemin topologique $P_{21}$ qui relie l'équipement $Eq_2$ à l'équipement $Eq_1$ est constitué par

$$P_{21} = \left\{TL_3^-, NP_{21}, TL_1^-\right\}.$$ Le chemin topologique $P_{13}$, reliant l'équipement $Eq_1$ à $Eq_3$, et celui $P_{23}$ reliant l'équipement

$Eq_2$ à $Eq_3$ sont respectivement constitués par $P_{13} = \left\{TL_1^+, NP_{13}, TL_7^+\right\}$ et $P_{23} = \left\{TL_3^-, NP_{23}, TL_7^+\right\}.$

La Fig. 4 donne une représentation objet (UML) des échanges de données entre modules logiciel hébergés par des équipements de la plateforme avionique.

On retrouve sur cette figure les objets « SystemFunctionOc » et « Parameter » de la représentation fonctionnelle ainsi que l'objet « Path » de la représentation matérielle.

Les modules logiciel (représentés par « SystemFunctionOc », 410) s'échangent des paramètres (représentés par « Parameter », 420) au moyen d'occurrences de signaux (représentées par « SignalOc », 430). Ces occurrences de signaux sont des instances d'un objet « Signal », désigné par 435). Comme on le verra en détail plus loin, l'objet « Signal » représente une classe d'occurrences de signal associées à un même paramètre, un même module logiciel source et un même support de communication. Les différents supports de communication sont représentés par l'objet « Media », 440. Les occurrences de signal relatives à un même signal peuvent emprunter des chemins topologiques distincts. Les chemins topologiques sont modélisés par l'objet « Path », 450.

Le modèle de données de la Fig. 4 permet de représenter les échanges entre modules logiciel au moyen d'occurrences de signal, un signal traduisant un échange entre systèmes fonctionnels.

Une occurrence de signal est associée à un module logiciel source et à un ou plusieurs module(s) logiciel destinataire(s). Réciproquement, à un module logiciel donné, on peut associer un ensemble d'occurrences de signal entrant (*RxSignalOc*) et un ensemble d'occurrences de signal sortant (*TxSignalOc*). Pour un calculateur embarqué, on peut ainsi définir l'ensemble des occurrences de signal entrant et des occurrences de signal sortant relatives aux modules logiciels hébergés par ce calculateur. Les attributs des occurrences de signal entrant sont réunis dans un fichier dit fichier d'interface d'entrée du calculateur. De manière similaire, les attributs des occurrences de signal sortant sont réunis dans un fichier d'interface de sortie du calculateur. Les fichiers d'interface d'entrée et de sortie peuvent être regroupés dans un seul fichier dit simplement fichier d'interface. Ce fichier d'interface permet de configurer les interfaces d'entrée et de sortie lors de l'initialisation du calculateur.

On notera respectivement « InputInterface » un objet modélisant un fichier d'interface d'entrée et « OutputInterface » un objet modélisant un fichier d'interface de sortie.

Le fichier d'interface de sortie est structuré en fonction des différents types de supports de communication. Dans le cas illustré, l'interface de sortie du calculateur est reliée à un réseau AFDX, à un bus de données ARINC 429 et à un bus CAN. On trouvera une description détaillée du réseau AFDX dans le document intitulé « AFDX protocol tutorial » disponible sous: www.acalmicrosystems.co.uk/whitepapers/sbs8.pdf et du protocole ARINC 429 dans le document intitulé « ARINC 429 protocol tutorial » disponible sous l'URL : www.acalmicrosystems.co.uk/whitepapers/sbs7.pdf.

Le fichier d'interface de sortie contient pour chaque support de communication les attributs de chaque occurrence de signal de sortie transmis sur ce support. Par exemple, une occurrence de signal transmis sur le bus ARINC 429 sera caractérisée par son format et son label. De manière similaire, une occurrence de signal transmis sur le réseau AFDX sera caractérisée par un certain nombre de paramètres par exemple le lien virtuel (et éventuellement le sous-lien virtuel) auquel il est rattaché, le port de transmission AFDX (AFDX_Tx_Port) c'est-à-dire le port UDP sur lequel les informations seront transmises, les indications permettant de localiser les informations transmises dans la trame charge utile UDP (format de message AFDX, *Functional Data Sets* etc.).

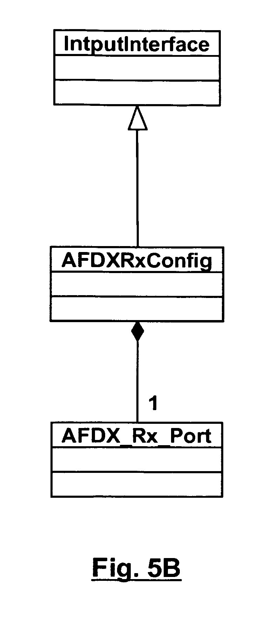

La Fig. 5B représente en UML un exemple de structure de données d'un fichier d'interface d'entrée de la classe « InputInterface ».

En règle générale le fichier d'interface d'entrée est structuré en fonction des différents types de supports de communication. Dans le cas illustré, l'interface d'entrée du calculateur est uniquement reliée à un réseau AFDX et le fichier d'interface d'entrée comprend pour chaque occurrence de signal d'entrée le port de réception AFDX (AFDX_Rx_Port), c'est-à-dire le port UDP sur lequel les informations relatives à ce signal pourront être récupérées.

Il convient de noter que les ports de communication (des interfaces d'entrée ou en sortie) associés à différentes occurrences d'un même signal ne sont pas nécessairement identiques.

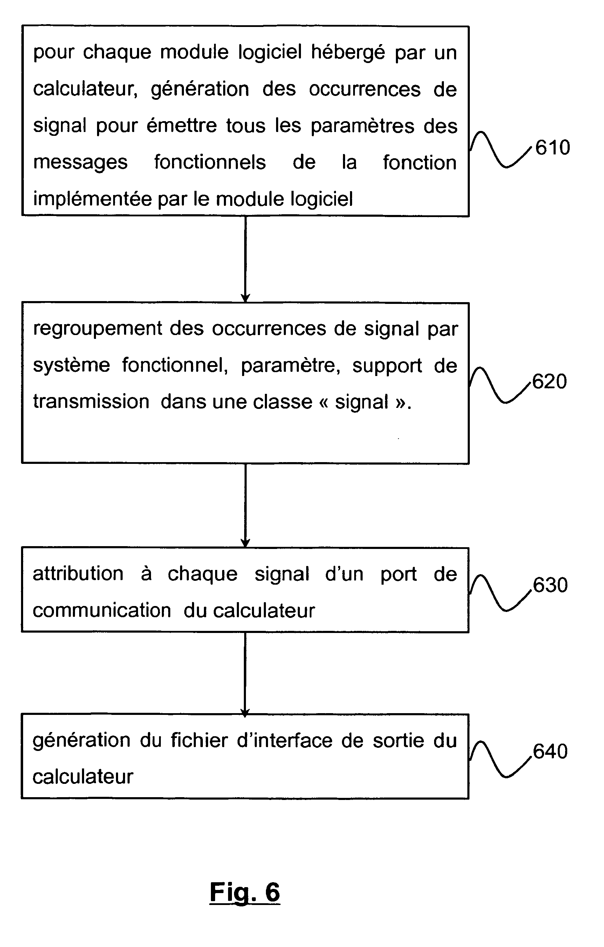

La Fig. 6 représente schématiquement une méthode de configuration des interfaces de sortie respectives des calculateurs de la plateforme avionique selon un mode de réalisation de l'invention.

Dans une première étape 610, on génère, pour chaque module logiciel, *fs_oc,* hébergé par un calculateur embarqué (occurrence d'équipement), l'ensemble des occurrences de signal, notées *signal_oc,* émises par ce module logiciel.

Plus précisément, pour un module logiciel *fs_oc* donné, on récupère de la base de données fonctionnelle la liste *f_l* des fonctions dans lesquelles le module logiciel *fs_oc* intervient, voir relation 131 en Fig. 1. A partir de cette même base de données, on détermine la liste *p_l* des paramètres fournis par une fonction quelconque de *f_l*, c'est-à-dire la liste des paramètres compris dans les messages transmis par les fonctions appartenant à *f_l*, voir successivement les relations 111 et 141 en Fig. 1.

Pour chaque paramètre $p \in p\_l$ on détermine ensuite à partir de la base de données fonctionnelle (voir successivement relations 141 et 151 en Fig. 1) la liste *fl-l* des liens fonctionnels véhiculant au moins un message contenant le paramètre *p*. Pour chaque lien fonctionnel $fl \in fl\_l$ on détermine alors les occurrences de ce lien (relation 161). Soit *fl_oc_l* la liste des occurrences de tous les liens fonctionnels de *fl-l*. On en déduit la liste *path_l* des chemins topologiques associés aux occurrences de lien fonctionnel de *fl_oc_l* (voire relation B reliant les Figs. 1 et 2) puis, de la base de données matérielle, la liste *med_l* des supports de communication (relation 281 en Fig. 2) utilisés par les premiers liens topologiques orientés des chemins topologiques de *path_l.* Plus précisément, si un chemin topologique *path* de *path_l* est constitué d'un seul lien topologique orienté entre une occurrence d'équipement source et une occurrence d'équipement de destination, le premier lien topologique *path_first_link* orienté de *path* sera ce lien unique. Si le chemin topologique est en revanche constitué d'un lien topologique reliant l'occurrence d'équipement source à un élément de réseau, un chemin à travers le réseau (NetPath) puis un autre lien topologique d'un élément de ce réseau à une occurrence d'équipement destinataire, *path_first_link* sera le lien topologique reliant l'occurrence d'équipement source au dit réseau.

A partir de la liste de paramètres *p_l* et de la liste de supports de communication *med_l* précédemment déterminées, on génère les occurrences de signal comme suit : pour chaque paramètre $p \in p\_l$ et chaque support de communication $med \in med\_l,$ on crée un objet *signal_oc* définissant une occurrence de signal, associée à *fs_oc, p, med* et à un sous-ensemble *signal_oc_path_l* de *path_l* tel que $\forall path \in signal\_oc\_path\_l, path\_first\_link$ est associé à *med.* En d'autres termes, on associe à cette occurrence de signal l'ensemble des chemins topologiques issus du module logiciel *fs_oc* et véhiculant le paramètre *p* sur le support de communication *med.* On attribue avantageusement à l'occurrence de signal *signal_oc* le même identifiant que celui du module logiciel *fs_oc* émettant le paramètre *p*.

Dans une seconde étape 620, on regroupe toutes les occurrences de signal *signal_oc* relatives à un même paramètre, un même système fonctionnel et à un même support de communication *med* (les modules logiciel sont des occurrences d'un système fonctionnel). On définit ainsi une classe d'occurrences de signal, c'est-à-dire un objet « Signal » au sens de la Fig. 4.

Dans une troisième étape, 630, on attribue un port de sortie (logique ou physique) à chaque signal ainsi défini. En procédant ainsi, on s'assure de la cohérence de la configuration des interfaces (de sortie) pour tous les modules logiciel associés à un même système fonctionnel. D'autre part, en cas d'une modification de la structure hardware d'un type de calculateur (par exemple modification d'un port physique en un port logique par exemple), il est aisé d'attribuer un nouveau port de sortie à chaque signal.

Dans une quatrième étape, 640, on génère le fichier d'interface (de sortie) de chaque calculateur à partir des attributs du signal ainsi défini.

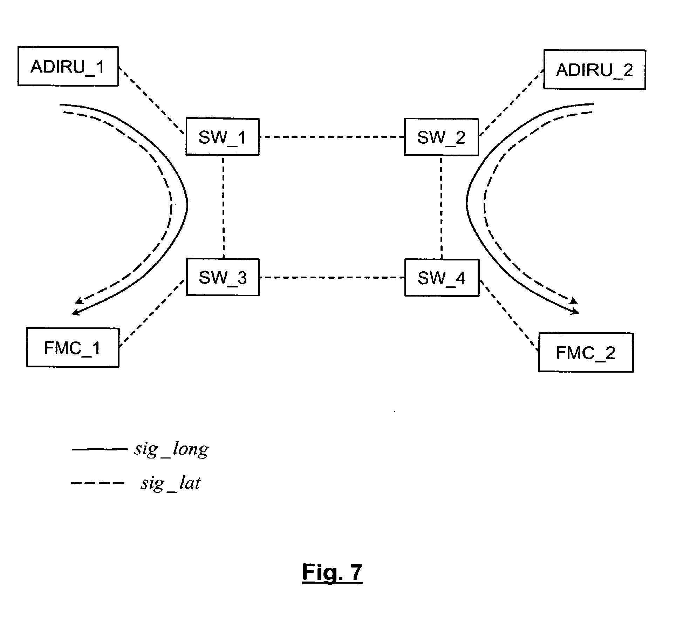

Un exemple de mise en oeuvre de la méthode de configuration selon l'invention est décrit ci-après en relation avec la Fig. 7, représentant un cas très simplifié de plateforme avionique.

On considère dans cet exemple deux fonctions avioniques, celle effectuant le calcul de la position de l'aéronef, *f_pos* et celle effectuant la gestion du plan de vol *f_fpm,* échangeant un message fonctionnel sur un lien fonctionnel. Plus précisément, la fonction *f_pos* transmet à la fonction *f_fpm* un message fonctionnel comprenant les paramètres *lat* et *long* indiquant respectivement la latitude et la longitude de l'aéronef. La fonction *f_pos* fait intervenir le système fonctionnel ADIRS (*Air Data Inertial Reference System*) et la fonction *f_fpm* fait intervenir le système fonctionnel FMS (*Flight Management System*). Le système ADIRS est implémenté à l'aide d'un premier module logiciel ADIRS_1 et d'un second module logiciel ADIRS-2 (occurrences du système fonctionnel ADIRS) hébergés respectivement par les calculateurs ADIRU_1 et ADIRU-2 (occurrences de l'équipement ADIRU). De manière similaire, le système FMS est implémenté à l'aide d'un premier module logiciel FMS-1 et d'un second module logiciel FMS_2 hébergés respectivement par les calculateurs FMC_1 et FMC_2.

On a représenté en Fig. 7 les calculateurs ADIRU_1, ADIRU_2, FMC_1 et FMC_2, reliés à l'aide d'un réseau AFDX comprenant quatre commutateurs de trames SW_1, SW_2, SW_3 et SW_4. Le réseau AFDX est par conséquent ici le seul support de communication utilisé.

La première occurrence du lien fonctionnel relie ADIRS-1 à FMS-1 et la seconde occurrence de ce lien relie ADIRS_2 à FMS_2. La première occurrence du lien fonctionnel est implémentée par un premier chemin topologique reliant ADIRU_1 à FMC_1. Ce chemin est constitué des liens topologiques ADIRU 1$\Rightarrow$SW_1, SW_1$\Rightarrow$ SW_3, SW_3$\Rightarrow$FMC_1. De même, la seconde occurrence du lien fonctionnel est implémentée à l'aide d'un second chemin topologique reliant ADIRU_2 à FMC_2. Ce chemin est constitué des liens topologiques ADIRU_2$\Rightarrow$SW_2, SW_2$\Rightarrow$SW_4, SW_4$\Rightarrow$FMC_2.

On peut ainsi générer l'occurrence de signal *lat*_1 associée au module logiciel ADIRS_1, au paramètre *lat,* au support de communication AFDX et au chemin topologique ADIRU_1$\Rightarrow$SW_1$\Rightarrow$SW_3$\Rightarrow$FMC_1. De même on peut générer l'occurrence de signal *lat_2* associée au module logiciel ADIRS_2, au paramètre *lat,* au support de communication AFDX et au chemin topologique Adieu_2⇒ SW_2⇒SW_4⇒FMC_2.

De manière similaire on génère l'occurrence de signal *long*_1 associée au module logiciel ADIRS_1, au paramètre *long,* au support de communication AFDX et au chemin topologique ADIRU_1⇒SW_1⇒SW_3⇒FMC_1. Enfin, on peut générer l'occurrence de signal *long*_2 associée au module logiciel ADIRS_2, au paramètre *long,* au support de communication AFDX et au chemin topologique ADIRU_2⇒SW_2⇒SW_4⇒FMC_2.

Les occurrences de signal *lat*_1 et *lat*_2 peuvent être regroupées pour créer un signal *sig_lat.* De même les occurrences de signal *long*-1 et *long*_2 peuvent être regroupées pour créer un signal *sig_long.*

On attribue ensuite au signal *sig_lat* un port de communication associé au système fonctionnel ADIRS, ce qui revient à créer ici un port UDP de sortie dans chacun des calculateurs ADIRU 1 et ADIRU_2. Ce port de communication n'est pas nécessairement le même dans chacun des calculateurs.

De manière similaire, on attribue au signal *sig_long* un port de communication associé au système fonctionnel ADIRS. Le cas échéant, le même port de communication peut être attribué aux signaux *sig_lat* et *sig_long.*

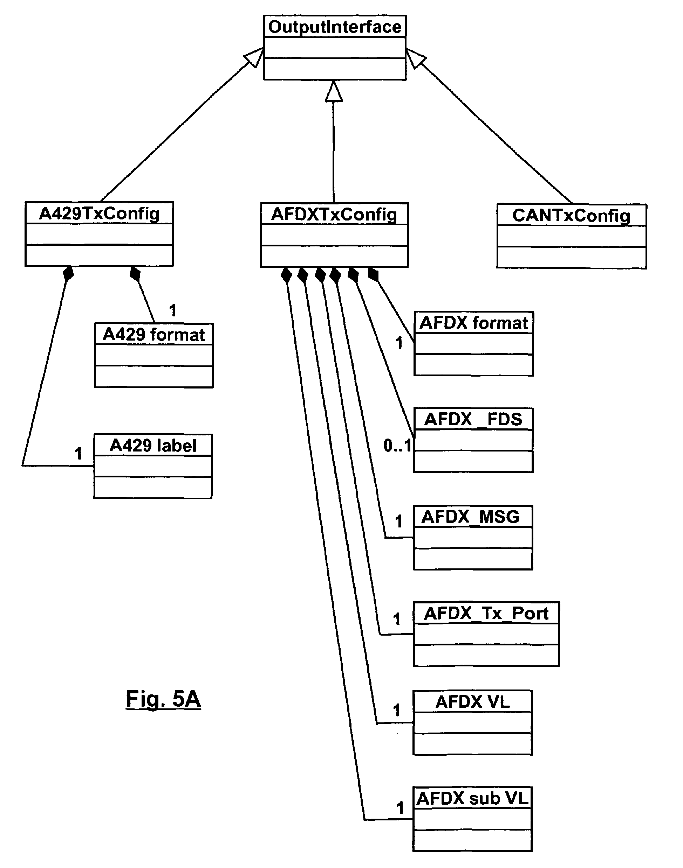

Comme on l'a vu en relation avec la Fig.5A d'autres attributs peuvent être renseignés pour les occurrences de *sig_lat* et de *sig_long* dans le fichier d'interface de sortie.

Certains modules logiciel émettent des occurrences de signal sans être à l'origine des paramètres qu'ils transmettent. Ils jouent le rôle de passerelle (au niveau applicatif) entre différents supports de communication.

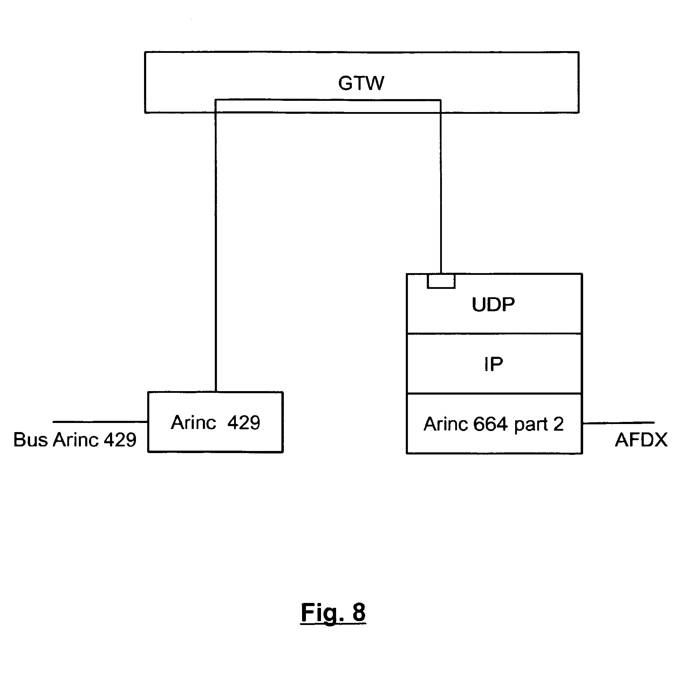

Nous avons illustré en Fig. 8 un exemple de telle passerelle entre un réseau AFDX et un bus ARINC 429 en faisant figurer les couches de protocole mises en jeu. Le module logiciel GTW jouant le rôle de passerelle applicative est hébergé par un calculateur connecté à ces deux supports de communication. La passerelle GTW est connectée d'une part à un port UDP sur lequel elle reçoit une occurrence de signal entrant et un port physique ARINC 429 sur lequel elle émet une occurrence de signal sortant.

La configuration des interfaces de sortie pour les calculateurs hébergeant des passerelles applicatives diffère de celle décrite pour les modules logiciel source.

Pour configurer ces interfaces de sortie, on utilise la liste des occurrences de signal générées par l'ensemble des modules logiciel source, comme expliqué en relation avec la Fig. 6.

Pour une occurrence de signal *signal_oc* donnée, associée à un module logiciel source *fs_oc,* un paramètre *p* et un sous-ensemble de chemins *signal_oc_path_l,* on définit le sous-ensemble de *signal_oc_path_l* constitué des chemins sur lesquels est placée une occurrence d'équipement (un calculateur) hébergeant une passerelle. On note ce sous-ensemble *signal_oc_gtw_path_l.* Soit *gtw_l* l'ensemble des passerelles hébergées par des calculateurs placés sur les chemins de *signal_oc_gtw_path_l.*

Pour chaque passerelle *gtw* ∈ *gtw_l* on peut déduire:

- la liste *gtw_rx_med_l* des supports de communication arrivant *gtw* via un chemin de *signal_oc_gtw_path_l;*
- la liste *gtw_tx_med_l* des supports de communication partant de *gtw* via un chemin de *signal_oc_gtw_path_l;*
- le sous-ensemble *gtw_path_l* de *signal_oc_gtw_path_l* constitué par les chemins passant par un calculateur hébergeant la passerelle *gtw.*

Avec ces conventions, pour chaque passerelle *gtw* de *gtw_l* et chaque support de communication *med* de *gtw_tx_med_l,* on crée une occurrence de signal sortant *gtw_signal_oc* associée à la passerelle *gtw,* au paramètre *p,* au support de communication *med* et à l'ensemble de chemins *gtw_path_l.* En d'autres termes, on associe à cette occurrence de signal l'ensemble des chemins topologiques issus du calculateur hébergeant *fs_oc* et passant par la passerelle hébergeant *gtw,* et véhiculant le paramètre *p* sur le support de communication *med.* On attribue avantageusement à l'occurrence de signal *gtw_signal_oc* le même identifiant d'occurrence que celui de la passerelle *gtw.*

Ayant procédé ainsi pour chaque occurrence de signal *signal_oc* associé un module logiciel source *fs_oc,* un paramètre *p* et un support de communication *med,* on peut regrouper toutes les occurrences relatives à un même paramètre, un même système fonctionnel (dont les occurrences sont des passerelles) et à un même support de communication pour définir un signal. On attribue à ce signal un port de communication, ce qui revient à créer un port de sortie dans chacun des calculateurs hébergeant une passerelle.

Enfin, la configuration des interfaces d'entrée des calculateurs de la plateforme avionique est effectuée comme suit :

On utilise l'ensemble des occurrences de signal générées par l'ensemble des modules logiciel source et l'ensemble des passerelles comme décrit plus haut. On considère une occurrence de signal *signal_oc* de cet ensemble, associée à un module logiciel source *fs_oc* ou une passerelle applicative *gtw,* un paramètre *p,* un support de communication *med* et un ensemble de chemins *signal_oc_path_l* (module logiciel source) ou *gtw_path_l* (passerelle applicative).

Pour chaque chemin *path* de *signal_oc_path_l,* on considère le premier calculateur placé sur le chemin *path* après celui qui héberge *fs_oc.* Si ce premier calculateur héberge une passerelle, on associe l'occurrence de signal *signal_oc* à cette passerelle et on lui attribue un port d'entrée (logique ou physique) du calculateur qui l'héberge. Dans la négative, on associe l'occurrence de signal *signal_oc* au module logiciel destinataire de l'occurrence de lien fonctionnel associé au chemin *path* (voir relation B en Figs. 1 et 2). On attribue également à cette occurrence de signal un port d'entrée (logique ou physique) du calculateur qui héberge le module logiciel destinataire.

De manière similaire, pour chaque chemin *path* de *gtw_path_l,* on considère le premier calculateur placé sur le chemin *path* après celui qui héberge *gtw,* et l'on procède comme ci-dessus.

## Revendications

1. Méthode de configuration assistée par ordinateur d'interfaces de calculateurs appartenant à une plateforme avionique, ladite plateforme implémentant une pluralité de fonctions avioniques pouvant échanger des messages fonctionnels, chaque fonction avionique étant implémentée par des modules logiciel, dits occurrences de système fonctionnel, hébergés dans des calculateurs, lesdits calculateurs pouvant communiquer à l'aide d'occurrences de signal transmis sur des supports de communication qui les relient entre eux, **caractérisée en ce que** :

   pour chaque module logiciel hébergé par un calculateur on crée (610) des occurrences de signal pour transmettre tous les paramètres des messages fonctionnels émis par la fonction que le module logiciel implémente, ce sur tous les supports de communication,
   on regroupe (620) lesdites occurrences de signal par système fonctionnel, paramètre et support de transmission pour créer des classes d'occurrences de signal,
   on attribue (630) à chaque classe d'occurrences de signal, un port de communication d'un calculateur et l'on configure les interfaces des calculateurs à l'aide des classes ainsi obtenues,
   pour chaque module logiciel *fs_oc* hébergé par un calculateur, on détermine la liste *f_l* des fonctions avioniques dans l'implémentation desquelles ce module logiciel intervient, puis la liste *p_l* des paramètres compris dans des messages fonctionnels émis par les fonctions de *f_l* et,
   pour chaque paramètre *p* de *p_l,* on détermine une liste *fl_l* de liens entre fonctions avioniques, dits liens fonctionnels, véhiculant au moins un message fonctionnel contenant ledit paramètre *p,* on en déduit une liste *path_l* de chemins à travers les supports de communication permettant d'acheminer lesdits messages, un chemin pouvant être constitué d'une liaison directe entre un premier calculateur et un second calculateur, ou bien d'une première liaison entre le premier calculateur et un premier noeud d'un réseau, d'un chemin à travers ce réseau et d'une seconde liaison entre un second noeud du réseau et le second calculateur,
   on détermine la liste *med_l* des supports de communication empruntés en premier par les chemins de *path_l,*
   pour un module logiciel donné *fs_oc,* on crée une occurrence de signal, pour chaque paramètre *p* de *p_l,* chaque support de communication *med* de *med_l* et un sous-ensemble *signal_oc_path_l* de chemins de *path_l* tel que la première liaison de ces chemins passe par un support de communication *med* de *med_l.*

2. Méthode de configuration selon la revendication 1, **caractérisée en ce que** la plateforme avionique comprend au moins un calculateur relié à deux supports de communication de types distincts, ledit calculateur hébergeant un module logiciel adapté à opérer comme passerelle applicative entre les deux supports de communication.

3. Méthode de configuration selon la revendication 2, **caractérisée en ce que** pour une occurrence de signal donnée, *signal_oc,* associée à un module logiciel *fs_oc,* un paramètre *p,* et un sous-ensemble *signal_oc_path_l,* on détermine un sous-ensemble de celui-ci, *signal_oc_gtw_l* constitué des chemins passant par au moins un calculateur hébergeant une dite passerelle applicative, puis l'ensemble *gtw_l* des passerelles applicatives hébergées par des calculateurs placés sur les chemins de *signal_oc_gtw_l,* puis que l'on détermine pour chaque passerelle *gtw* de *gtw_l :*

   - la liste *gtw_rx_med_l* des supports de communication arrivant *gtw* via un chemin de *signal_oc_gtw_path_l* ;
   - la liste *gtw_tx_med_l* des supports de communication partant de *gtw* via un chemin de *signal_oc_gtw_path_l* ;
   - le sous-ensemble *gtw_path_l* de *signal_oc_gtw_path_l* constitué par les chemins passant par un calculateur hébergeant la passerelle *gtw.*

4. Méthode de configuration selon la revendication 3, **caractérisée en ce que** pour chaque passerelle *gtw* de *gtw_l* et chaque support de communication de *gxv_tx_med_l,* on crée une occurrence de signal *gtw_signal_oc* associée à la passerelle *gtw,* au paramètre *p,* au support de communication *med* et à l'ensemble de chemins *gtw_path_l.*

5. Méthode de configuration selon la revendication 4, **caractérisée en ce que** pour chaque occurrence de signal *signal_oc,* associée à un module logiciel source *fs_oc* ou une passerelle applicative *gtw,* un paramètre *p,* un support de communication *med* et un ensemble de chemins *signal_oc_path_l* ou *gtw_path_l,* on détermine pour chaque chemin *path* de *signal_oc_path_l* ou *gtw_path_l,* le premier calculateur placé sur le chemin *path* après celui qui héberge le module logiciel *fs_oc* ou la passerelle applicative *gtw,* et si ce calculateur héberge une passerelle, on associe l'occurrence de signal *signal_oc* à cette dernière, et dans la négative on l'associe au module logiciel destinataire de l'occurrence de lien fonctionnel associé au chemin *path*

6. Méthode de configuration selon la revendication 5, **caractérisée en ce que** l'on attribue à l'occurrence de signal *signal_oc* un port de communication du calculateur hébergeant respectivement la passerelle applicative et le module logiciel destinataire.

7. Méthode de configuration selon l'une des revendications précédentes, **caractérisée en ce que** la plateforme avionique est de type IMA.

**Patentansprüche**

1. Computerunterstütztes Verfahren zur Konfiguration von Rechnerschnittstellen, die zu einer Avionikplattform gehören, welche Plattform eine Mehrzahl von Avionikfunktionen implementiert, die funktionelle Nachrichten austauschen können, wobei jede Avionikfunktion durch Softwaremodule implementiert ist, genannt Vorkommen des funktionellen Systems, die in Rechnern untergebracht sind, wobei die Rechner mit Hilfe von Signalvorkommen kommunizieren können, welche auf Kommunikationsträgern übertragen werden, die sie miteinander verbinden, **dadurch gekennzeichnet, dass**:

man für jedes Softwaremodul, das in einem Rechner untergebracht ist, Signalvorkommen erzeugt (610), um alle Parameter der funktionellen Nachrichten zu übertragen, die durch die Funktion ausgesandt sind, welche das Softwaremodul implementiert, und zwar auf allen Kommunikationsträgern,
man die Signalvorkommen nach funktionellem System, Parameter und Übertragungsträger neu gruppiert (620), um Signalvorkommensklassen zu erzeugen,
man jeder Signalvorkommensklasse einen Kommunikationsport eines Rechners zuweist (630) und man die Schnittstellen der Rechner mit Hilfe der derart erhaltenen Klassen konfiguriert,
man für jedes Softwaremodul *fs_oc,* das in einem Rechner untergebracht ist, die Liste *f_l* der Avionikfunktionen bestimmt, in deren Implementierung dieses Softwaremodul vorkommt, dann die Liste *p_l* der Parameter, die in funktionellen Nachrichten enthalten sind, welche durch die Funktionen von *f_l* ausgesandt werden, und
man für jeden Parameter *p* von *p_l* eine Liste *fl_l* von Verbindungen zwischen Avionikfunktionen bestimmt, genannt funktionelle Verbindungen, die wenigstens eine funktionelle Nachricht transportieren, welche den Parameter *p* enthält, man hieraus eine Liste *path_l* von Wegen durch die Kommunikationsträger ableitet, die es erlauben, die Nachrichten auf den Weg zu bringen, wobei ein Weg gebildet sein kann durch eine direkte Verbindung zwischen einem ersten Rechner und einem zweiten Rechner oder aber durch eine erste Verbindung zwischen dem ersten Rechner und einem ersten Knoten eines Netzwerks, einen Weg durch dieses Netzwerk hindurch, sowie eine zweite Verbindung zwischen einem zweiten Knoten des Netzwerks und dem zweiten Rechner,
man die Liste *med_l* der Kommunikationsträger bestimmt, die zuerst durch die Wege von *path_l* genommen werden, für ein gegebenes Softwaremodul *fs_oc,* man ein Signalvorkommen erzeugt für jeden Parameter *p* von *p_l,* jeden Kommunikationsträger *med* von *med_l* und eine Untergruppe *signal_oc_path_l* von Wegen von *path_l* derart, dass die erste Verbindung dieser Wege durch einen Kommunikationsträger *med von med_l* verläuft.

2. Verfahren zur Konfiguration nach Anspruch 1, **dadurch gekennzeichnet, dass** die Avionikplattform wenigstens einen Rechner umfaßt, der mit zwei Kommunikationsträgern von unterschiedlichem Typ verbunden ist, wobei in dem Rechner ein Softwaremodul untergebracht ist, das dazu ausgelegt ist, als ein Anwendungsgateway zwischen den zwei Kommunikationsträgern zu arbeiten.

3. Verfahren zur Konfiguration nach Anspruch 2, **dadurch gekennzeichnet, dass** man für ein gegebenes Signalauftreten *signal_oc,* das einem Softwaremodule *fs_oc,* einem Parameter *p* sowie einer Untergruppe *signal_oc_path_l* zugeordnet ist, eine Untergruppe davon *signal_oc_gtw_l* bestimmt, gebildet durch Wege, welche durch wenigstens einen Rechner verlaufen, in dem ein Anwendungsgateway untergebracht ist, dann die Gruppe *gtw_l* der Anwendungsgateways, die in Rechnern untergebracht sind, welche auf den Wegen von *signal_oc_gtw_l* plaziert sind, und man dann für jedes Gateway *gtw* von *gtw_l* folgendes bestimmt:

- die Liste *gtw_rx_med_l* von Eingangskommunikationsträgern *gtw* über einen Weg von *signal_oc_gtw_path_l;*
- die Liste *gtw_tx_med_l* von Ausgangskommunikationsträgern von *gtw* über einen Weg von *signal_oc_gtw_path_l*;
- die Untergruppe *gtw_path_l* von *signal_oc_gtw_path_l*, gebildet durch die Wege, die durch einen Rechner verlaufen, in dem das Gateway *gtw* untergebracht ist.

**4.** Verfahren zur Konfiguration nach Anspruch 3, **dadurch gekennzeichnet, dass** man für jedes Gateway *gtw* von *gtw_l* und jeden Kommunikationsträger von *gtw_tx_med_l* ein Signalvorkommen *gtw_signal_oc* erzeugt, das dem Gateway *gtw*, dem Parameter *p*, dem Kommunikationsträger *med* und der Gruppe von Wegen *gtw_path_l* zugeordnet ist.

**5.** Verfahren zur Konfiguration nach Anspruch 4, **dadurch gekennzeichnet, dass** man für jedes Signalvorkommen *signal_oc*, das einem Quellensoftwaremodul *fs_oc* oder einem Anwendungsgateway *gtw*, einem Parameter *p*, einem Kommunikationsträger *med* und einer Gruppe von Wegen *signal_oc_path_l* oder *gtw_path_l* zugeordnet ist, für jeden Weg *path* von *signal_oc_path_l* oder *gtw_path_l* den ersten Rechner bestimmt, der auf dem Weg *path* platziert ist, nach demjenigen, in dem das Softwaremodul *fs_oc* oder das Anwendungsgateway *gtw* untergebracht ist, und dass man, falls in diesem Rechner ein Gateway untergebracht ist, das Signalvorkommen *signal_oc* diesem letztgenannten zuweist, und dass man es andernfalls dem Zielsoftwaremodul des Vorkommens der funktionellen Verbindung zuweist, die dem Weg *path* zugewiesen ist.

**6.** Verfahren zur Konfiguration nach Anspruch 5, **dadurch gekennzeichnet, dass** man dem Signalvorkommen *signal_oc* einen Kommunikationsport zuordnet, in dem das Anwendungsgateway bzw. das Zielsoftwaremodul untergebracht ist.

**7.** Verfahren zur Konfiguration nach einem der vorhergehenden Ansprüche, **dadurch gekennzeichnet, dass** die Avionikplattform vom Typ IMA ist.

## Claims

**1.** A method for configuring interfaces of computers belonging to an avionic platform, said platform implementing a plurality of avionic functions, which may exchange functional messages, each avionic function being implemented by software modules, said functional system occurrences, hosted in computers, said computers being able to communicate by means of signal occurrences transmitted over communications media which connect them together, **characterized in that**

for each software module hosted by a computer signal occurrences are created (610) for transmitting all the parameters of the functional messages emitted by the function implemented by the module, this over all communications media,

said signal occurrences are grouped (620) per functional system, parameter and transmission medium for creating signal occurrence classes,

a communications port of a computer is assigned (630) to each signal occurrence class, and the interfaces of the computers are configured, based on the classes thus obtained,

for each software module *fs_oc* hosted by a computer, the list *f_l* of avionic functions, in the implementation of which this software module intervenes, and then the list *p_l* of the parameters comprised in functional messages emitted by the functions of *f_l* are determined,

for each parameter *p* of *p_l*, a list *fl_l* of links between avionic functions, said functional links, conveying at least one functional message containing said parameter *p* is determined, a list *path_l* of paths through the communications media for forwarding said messages is inferred therefrom, a path being able to consist of a direct link between a first computer and a second computer, or else, of a first link between the first computer and a first node of a network, of a path through this network and of a second link between the second node of the network and the second computer, the list *med_l* of the communications media first followed through the paths of *path_l* is determined,

for a given software module *fs_oc* a signal occurrence is created, for each parameter *p* of *p_l*, each communications medium *med* of *med_l* and a subset *signal_oc_path_l* of paths of *path_l* such that the first connection of these paths passes through a communications medium *med* of *med_l*.

**2.** The configuration method according to claim 1, **characterized in that** the avionic platform comprises at least one computer connected to two communications media of distinct types, said computer hosting a software module suitable for operating as an application gateway between both communications media.

3. The configuration method according to claim 2, **characterized in that** for a given signal occurrence, *signal_oc,* associated with a software module *fs_oc,* a parameter *p,* and a subset *signal_oc_path_l,* a subset of the latter is determined, *signal_oc_gtw_l,* consisting of paths passing through at least one computer hosting a so-called application gateway, and then the set *gtw_l* of the application gateways is determined, hosted by computers placed on the paths of *signal_oc_gtw_l,* next for each gateway *gtw* of *glw_l*

- the list *gtw_rx_med_l* of communications media arriving at *gtw* via a path of *signal_oc_glw_path_l*;
- the list *gtw_tx_med_l* of communications media leaving *gtw* via a path of *signal_oc_gtw_path_l*;
- the subset *gtw_path_l* of *signal_oc_gtw_path_l* formed by the paths passing through a computer hosting the gateway *gtw,*

are determined.

4. The configuration method according to claim 3, **characterized in that** for each gateway *gtw* of *gtw_l* and each communications medium of *gtw_tx_med_l ,* a signal occurrence *gtw_signal_oc* is created associated with the gateway *gtw,* with the parameter *p,* with the communications medium *med* and with the set of paths *gtw_path_l.*

5. The configuration method according to claim 4, **characterized in that** for each signal occurrence *signal_oc,* associated with a source software module *fs_oc* or an application gateway *gtw,* a parameter *p,* a communications medium *med* and a set of paths *signal_oc_path_l* or *gtw_path_l,* for each path *path* of *signal_oc_path_l* or *glw_path_l*, the first computer is determined placed on the path *path* after the one which hosts the software module *fs_oc* or the application gateway *gtw,* and if this computer hosts a gateway the signal occurrence *signal_oc* is associated with the latter, and if not, it is associated with the addressed software module of the functional link occurrence associated with the path *path .*

6. The configuration method according to claim 5, **characterized in that** a communications port of the computer hosting the application gateway and the addressed software module respectively is assigned to the signal occurrence *signal_oc.*

7. The configuration method according to any of the preceding claims, **characterized in that** the avionic platform is of the IMA type.

**Fig. 1**

**Fig. 2**

**Fig. 3A**

**Fig. 3B**

**Fig. 3C**

**Fig. 4**

**Fig. 5A**

```
┌─────────────────────────┐
│     IntputInterface     │
├─────────────────────────┤
│                         │
├─────────────────────────┤
│                         │
└─────────────────────────┘
              △
              │
              │
              │
┌─────────────────────────┐
│      AFDXRxConfig       │
├─────────────────────────┤
│                         │
├─────────────────────────┤
│                         │
└─────────────────────────┘
              ◆
              │
              │ 1
              │
┌─────────────────────────┐
│      AFDX_Rx_Port       │
├─────────────────────────┤
│                         │
├─────────────────────────┤
│                         │
└─────────────────────────┘
```

## Fig. 5B

pour chaque module logiciel hébergé par un calculateur, génération des occurrences de signal pour émettre tous les paramètres des messages fonctionnels de la fonction implémentée par le module logiciel

610

regroupement des occurrences de signal par système fonctionnel, paramètre, support de transmission dans une classe « signal ».

620

attribution à chaque signal d'un port de communication du calculateur

630

génération du fichier d'interface de sortie du calculateur

640

## Fig. 6

—————— sig_long

— — — — sig_lat

**Fig. 7**

## Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R.L. ALENA et al.** Communications for Integrated Modular Avionics. *Aerospace Conference,* 2007, 1-18
- **P. BIEBER et al.** Constraint-based design of avionics platform - Preliminary design exploration. *ERTS Toulouse, SEE,* Janvier 2008
- *AFDX protocol tutorial, www.acalmicrosystems.co.uk/whitepapers/sbs8.pdf*
- *ARINC 429 protocol tutorial, www.acalmicrosystems.co.uk/whitepapers/sbs7.pdf.*